# EUROPÄISCHE PATENTSCHRIFT

(11) **EP 0 362 566 B1**
(45) Veröffentlichungstag und Bekanntmachung des Hinweises auf die Patenterteilung: **03.03.1993**
(21) Anmeldenummer: 89116501.1
(22) Anmeldetag: 07.09.1989
(51) Int. Cl.: B62D 7/16, F16F 1/38

(54) **Elastisches Lager**
Elastic mounting
Support élastique

(30) Priorität: 01.10.1988 DE 3833409
(43) Veröffentlichungstag der Anmeldung: 11.04.1990
(73) Patentinhaber: TRW Fahrwerksysteme GmbH & Co. KG, 40547 Düsseldorf (DE)
(72) Erfinder: Krieg, Michael, D-4005 Meerbusch 2 (DE); Busse, Fritz, D-4010 Hilden (DE)
(74) Vertreter: Stenger, Watzke & Ring Patentanwälte

(56) Entgegenhaltungen:
- DE-A- 3 032 788
- FR-A- 1 263 246
- GB-A- 1 360 515
- US-A- 2 859 033
- US-A- 3 194 614

## Beschreibung

Die Erfindung betrifft zum einen ein elastisches Lager für Lenkgestänge von Kraftfahrzeugen mit einem drehbaren und begrenzt winkel- und radialbeweglichen Zapfen, wobei der Zapfen unter Zwischenlage einer Buchse begrenzt winkel- bzw. radialbeweglich in einer Zwischenschale eingepreßt ist und wobei die Zwischenschale beweglich in einem Gelenkgehäuse gelagert ist.

Zum anderen betrifft die Erfindung ein elastisches Lager für Lenkgestänge von Kraftfahrzeugen, mit einem drehbaren und begrenzt winkel- und radialbeweglichen Zapfen, wobei der Zapfen drehbar in einer Zwischenschale gelagert ist und wobei die Zwischenschale unter Zwischenlage einer elastomeren Buchse begrenzt winkel- bzw. radialbeweglich in ein Gelenkgehäuse eingepreßt ist.

Elastische Lager der vorstehend beschriebenen Art werden besonders für die Lagerung der Mittelstange dreiteiliger Lenkgestänge für Kraftfahrzeuge benötigt, wobei eine Drehung des Zapfens auch mit geringem Drehmoment und eine Dämpfung auftretender Schwingungen möglich sein müssen.

Aus der DE-A- 30 04 75 ist bereits eine elastische Lagerung mit einem zylindrischen Zapfen bekannt, der in einem gummielastischen Körper gehalten ist, wobei an einem Bund des Körpers anliegende Spannringe diesen in einem Gelenkgehäuse halten und vorspannen. Das Drehmoment des Zapfens ist jedoch besonders groß, weil der gummielastische Körper eine hohe Reibungshaftung an der Gehäuseinnenwand aufweist. Außerdem werden bei der vorbekannten Lagerung sowohl das Drehmoment des Zapfens, als auch die Elastizitäten seiner Winkel- und Radialbewegung von der Vorspannung der Spannringe bestimmt, so daß diese Betriebsparameter nicht unabhängig voneinander eingestellt werden können.

Die DE-A- 36 13 123 offenbart bereits gattungsgemäße elastische Lager, bei denen jedoch der Zapfen in Zapfenachsrichtung unbehindert bewegt werden kann, weil zwischen Zwischenschale und Gelenkgehäuse bzw. zwischen Zwischenschale und Zapfen Drehgleitlager angeordnet sind. Da jedes Drehgleitlager von einem in einer Gleitbüchse axial verschiebbaren Lagerteil gebildet wird, hängt das Drehmoment insbesondere von den Abmessungen und Werkstoffeigenschaften dieser Bauteile ab, so daß es stark mit den Fertigungstoleranzen schwankt. Das Herstellen eines Lagers mit einem bestimmten und engtolerierten Drehmoment ist deshalb mit einem erheblichen Fertigungsaufwand verbunden. Außerdem unterliegt das Drehmoment erheblichen betrieblichen Schwankungen, insbesondere durch Verschleiß der Gleitflächen und durch die verschiedene Wärmeausdehnung der Gleitbüchse und des Lagerteiles.

Die US-C- 28 46 251 offenbart ein elastisches, begrenzt winkel- und radialbewegliches Drehlager mit auf einem Bund des Zapfens ausgebildeten Lagerflächen. Bei diesem Drehlager fehlt eine Zwischenschale und die Drehbeweglichkeit ist nicht unabhängig von der Radial- und Winkelbeweglichkeit einstellbar.

Davon ausgehend liegt der Erfindung die Aufgabe zugrunde, ein verbessertes elastisches Lager mit unabhängig voneinander wählbarem Drehmoment und Elastizitäten der Winkel-und Radialbewegung des Zapfens zu schaffen, das insbesondere leichter herstellbar ist und bei dem das Drehmoment nur geringen betrieblichen Schwankungen unterliegt.

Zur technischen **Lösung** ist in Verbindung mit den Merkmalen des ersten gattungsgemäßen Lagers vorgesehen, daß die Zwischenschale radial außen einen Bund aufweist, daß zwischen Zwischenschale und Gelenkgehäuse zwei sich axial beidseits des Bundes auf diesem mit Reibflächen abstützende bezüglich des Gelenkgehäuses verdrehsichere Lagerschalen eingesetzt sind und daß die Lagerschalen von einem am Gelenkgehäuse abgestützten Federelement in Zapfenachsrichtung gegen den Bund gedrückt werden.

Bei dieser erfindungsgemäßen Lösung wird der Zapfen so unter Vorspannung von der elastomeren Buchse in der Zwischenschale gehalten, daß Zapfen und Zwischenschale nicht frei gegeneinander verdreht werden können. Die Dimensionierung und Beschaffenheit der elastomeren Buchse legt jedoch die Elastizitäten der Winkel- und Radialbewegung des Zapfens der Lagerung fest. Das Drehmoment hingegen wird völlig unabhänigig von den Elastizitäten von der Vorspannung des Federelementes festgelegt, welches die Lagerschalen in Zapfenachsrichtung gegen den Bund der mit dem Zapfen drehbeweglichen Zwischenschale drückt. Das Federelement bewirkt außerdem durch seine Vorspannung einen Ausgleich von Drehmomentschwankungen während des Betriebes, weil es die Lagerschalen mit annähernd konstanter Druckkraft gegen den Bund preßt.

Bei einer Ausgestaltung ist vorgesehen, daß die erste Lagerschale verdrehsicher in das Gelenkgehäuse eingepreßt ist, daß das Federelement an der anderen Lagerschale anliegt und daß beide Lagerschalen über eine Stirnverzahnung verdrehsicher zueinander im Gelenkgehäuse gehalten sind. Bei dieser Lösung sind beide Lagerschalen verdrehgesichert, wobei lediglich die zweite Lagerschale zum Aufbringen des Lagerdruckes gegen den Bund axial verschieblich ist. Hierdurch werden die Drehmomenttoleranzen weiter eingeengt.

Bei einer weiteren Ausgestaltung weist die Zwischenschale einen radial nach innen, bis an den Zapfen herangeführten Fortsatz auf, der für manche Anwendungsfälle eine reine Radialbewegung des Zapfens unterbindet, dessen Winkel- und Drehbeweglichkeit aber nicht beeinflußt.

Bei einer Weiterbildung hat der Zapfen stirnseitig eine vernietete Scheibe zum Abstützen an einer Stirnseite der Zwischenschale und am Gelenkgehäuse und sind zur Erhaltung der Winkel- und Radialbeweglichkeit des Zapfens zwischen Scheibe und Stirnseite des Zapfens bzw. Gelenkgehäuse Spalte ausgebildet, so daß der Zapfen ohne Beeinträchtigung der Funktion des Lagers vor einem Drücken oder Ziehen aus seinem Preßsitz in der Zwischenschale gesichert ist.

Zur **Lösung** der Aufgabe ist außerdem in Verbindung mit den Merkmalen des zweiten gattungsgemäßen Lagers vorgesehen, daß der Zapfen radial außen einen Bund aufweist, daß radial zwischen dem Zapfen und der Zwischenschale zwei sich axial beidseits des Bundes auf diesem mit Reibflächen abstützende, bezüglich der Zwischenschale verdrehsichere Lagerschalen eingesetzt sind, und daß die Lagerschalen von einem am Gelenkgehäuse abgestützten Federelement in Zapfenachsrichtung gegen den Bund gedrückt werden.

Bei dieser erfindungsgemäßen Lösung wird die erste Zwischenschale so unter Vorspannung von der elastomeren Buchse in dem Gelenkgehäuse gehalten, daß sie nicht frei gegenüber dem Gelenkgehäuse verdreht werden kann. Wiederum legt die Dimensionierung und Beschaffenheit der elastomeren Buchse die Elastizitäten der Winkel- und Radialbeweglichkeit des Zapfens der Lagerung fest, weil der in der Zwischenschale gelagerte Zapfen die gleiche Winkel- und Radialbeweglichkeit wie die erste Zwischenschale aufweist. Das Drehmoment der Lagerung hingegen wird völlig unabhängig von den Elastizitäten von der Vorspannung des Federelementes festgelegt, welches mittels der zweiten Zwischenschale den Bund des Zapfens zwischen den beiden Zwischenschalen vorspannt. Auch bei dieser Lösung gleicht das Federelement Fertigungstoleranzen und Verschleiß aus, da es für eine relativ konstante Pressung der Zwischenschalen gegen den Bund sorgt. Aufgrund seiner Elastizität läßt das Federelement außerdem die gewünschte Winkel- und Radialbeweglichkeit der Zwischenschale zu.

Bei einer Ausgestaltung dieser Lösung weist die Stirnfläche der einen Zwischenschale einen Innenkonus auf, welcher mit dem radialen Gehäusevorsprung im Längsschnitt einen zur Zapfenachse geöffneten Spalt bildet und eine verbesserte Winkelbeweglichkeit des Zapfens und der Zwischenschale ermöglicht.

Bei einer Weiterbildung ist die zweite Zwischenschale einstückig mit der einen Lagerschale aufgebildet und die andere Lagerschale in eine Ausnehmung der Zwischenschale eingesetzt, wodurch sich eine besonders platzsparende Bauweise ergibt.

Besonders engtolerierte Drehmomente werden erreicht, wenn die mit der Zwischenschale einstückige eine Lagerschale sich mit einer Stirnfläche an einem radialen Vorsprung des Gelenkgehäuses abstützt.

Der Bund der Zwischlenschale bzw. des Zapfens kann ebene Lagerflächen für die Lagerschale bzw. Zwischenschale aufweisen. Hierdurch wird aber nur eine Abstützung in Zapfenachsrichtung erreicht, so daß die Lagerschale die Zwischenschale bzw. die Zwischenschale den Zapfen zusätzlich noch in Radialrichtung abstützen müssen. Hiermit sind gesteigerte Anforderungen an die Herstellgenauigkeit verbunden. Wenn jedoch der Bund der Zwischenschale bzw. des Zapfens zwei konische Lagerflächen für die Lagerschale bzw. die Zwischenschale aufweist, reicht es für eine axiale und radiale Abstützung aus, wenn die Lagerschale ausschließlich an dem Bund der Zwischenschale bzw. die Zwischenschale ausschließlich an dem Bund des Zapfens abgestützt ist. Hiermit ist eine erhebliche Verringerung des Fertigungsaufwandes verbunden, weil daß die Lagerschalen bzw. die Zwischenschalen vorspannende Federelement die Fertigungstoleranzen ausgleicht.

Nach einer weiteren Ausgestaltung kann als Federelement ein O-Ring vorgesehen sein, der eine zusätzliche Dichtfunktion ausübt. Größere Drehmomente werden vorzugsweise mit einer Tellerfeder als Federelement eingestellt.

Bevorzugter Werkstoff für die Zwischenschale bzw. mindestens eine Lagerschale ist ein harter oder hartelastischer Kunststoff. Auch kommt ein Lagermetall in Betracht. Die selben Kunststoffe oder Lagermetalle können auch bei mindestens einer Lagerschale verwendet werden.

Weitere Einzelheiten und Vorteile des Gegenstandes der Erfindung ergeben sich aus der nachfolgenden Beschreibung der zugehörigen Zeichnung, die drei bevorzugte Ausführungsformen eines erfindungsgemäßen elastischen Lagers zeigt. In der Zeichnung zeigt:
- Fig. 1: ein Lager mit einer drehbar in Lagerschalen gelagerten Zwischenschale im Längsschnitt;
- Fig. 2: ein Lager mit einer drehbar in Lagerschalen gelagerten und einen radialen Fortsatz aufweisenden Zwischenschale im Längsschnitt;
- Fig. 3: ein Lager mit einem drehbar in einer Zwischenschale gelagerten Zapfen im Längsschnitt;
- Fig. 4: Einzelheit IV. gemäß Fig. 3 in vergrößerter Darstellung;
- Fig. 5: ein Lager mit einem drehbar in einer Zwischenschale mit Zwischenhülse gelagerten Zapfen im Längsschnitt.

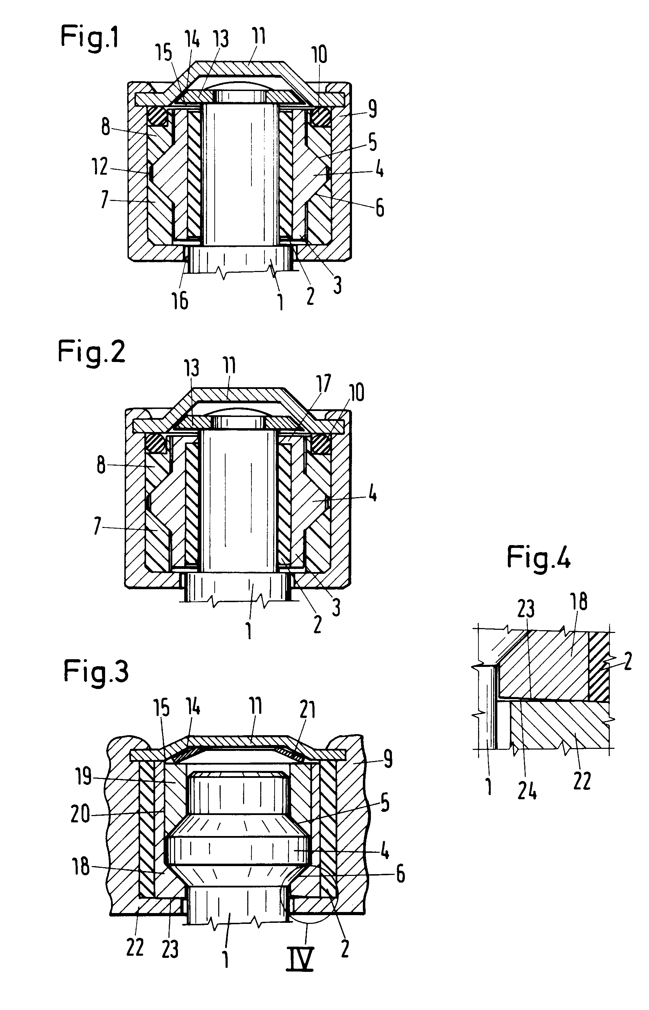

Die in den Fig. 1 bis 3 dargestellten elastischen Lager sind um die Zapfenachse symmetrisch aufgebaut, so daß weitere Schnittdarstellungen nicht erörtert werden müssen.

Bei dem Lager gemäß Fig. 1 ist der Zapfen 1 unter Zwischenlage einer Buchse 2 aus einem elastomeren oder gummielastischen Material in eine Zwischenschale 3 eingepreßt. Der Zapfen 1 wird von der Buchse 2 gehalten, ist aber infolge der Elastizität der Buchse 2 in der Zwischenschale 3 begrenzt winkel- und radialbeweglich.

Die Zwischenschale 3 hat einen Bund 4 mit konischen Lagerflächen 5,6, gegen die eine zweiteilige Lagerschale aus einer ersten Lagerschale 7 und einer zweiten Lagerschale 8 drückt. Die Lagerschalen 7,8 liegen ausschließlich im Bereich der Lagerflächen 5,6 an der Zwischenschale 3 an, so daß das Drehmoment der Zwischenschale 3 ausschließlich von der axialen Vorspannung der Lagerschalenhälften 7,8 bestimmt wird.

Die erste Lagerschale 7 ist verdrehsicher zwischen Lagerfläche 6 und einem Gelenkgehäuse 9 eingepreßt. Die zweite Lagerschale hingegen ist innerhalb des Gelenkgehäuses 9 axial verschieblich und wird von einem O-Ring 10 gegen den Bund 4 gedrückt, wobei sich der O-Ring 10 an einem eingewaltzten Verschlußdeckel 11 des Gelenkgehäuses 9 abstützt.

Zwischen den beiden Lagerschalen 7,8 ist eine Stirnverzahnung 12 ausgebildet, welche die zweite Lagerschale 8 an der eingepreßten ersten Lagerschale 7 gegen ein Verdrehen im Gelenkgehäuse 9 sichert.

Der Zapfen 1 weist stirnseitig eine vernietete Scheibe 13 auf, welche den Zapfen 1 an einem Drücken oder Ziehen aus seinem Preßsitz heraus hindert. Um eine Winkel- und Radialbeweglichkeit des Zapfens 1 sicherzustellen, ist der Rand der Scheibe 13 parallel zur Seitenwand des topfartig ausgebildeten Verschlußdeckels 11 angeschrägt und ist ein erster Spalt 14 zwischen Rand der Scheibe 13 und Seitenwand des Verschlußdeckels 11 und ein zweiter Spalt 15 zwischen Unterseite der Scheibe 13 und Zwischenschale 3 bzw. Buchse 2 vorgesehen. Aus den gleichen Gründen ist zwischen einer Gehäuseöffnung und dem Zapfen 1 ein dritter Spalt 16 vorgesehen.

Der Bund 4 der Zwischenschale 3 ist bei der dargestellten Ausführungsform in Zapfenachsrichtung mittig angeordnet. Er kann aber auch in Zapfenachsrichtung verschoben sein, um z.B. bei bestimmten Winkelbewegungen des Zapfens 1 eine Änderung des Drehmoments zu erreichen.

In einziger Abweichung zu dem in Fig. 1 dargestellten elastischen Lager weist das in der Fig. 2 dargestellte an der Zwischenschale 3 einen radial nach innen gerichteten, bis an den Zapfen 1 herangeführten Fortsatz 17 auf, der den Zapfen 1 an einer Radialbewegung hindert. Damit die Winkelbeweglichkeit des Zapfens 1 praktisch unbeeinträchtigt bleibt, ist die Ausdehnung des Fortsatzes 17 in Zapfenachsrichtung erheblich kleiner als die Ausdehnung der Aufnahme der Zwischenschale 3 für den Zapfen 1. Im übrigen treffen die Erläuterungen zu dem Lager gemäß Fig. 1 auch für das Lager gemäß Fig. 2 zu.

Schließlich zeigt die Fig. 3 eine Ausgestaltung mit einem Zapfen 1, der einen Bund 4 mit konischen Lagerflächen 5,6 aufweist. An den konischen Lagerflächen 5,6 wird der Zapfen 1 drehbeweglich in einer Zwischenschale aus einer ersten Zwischenschale 18 und einer zweiten Zwischenschale 19 gehalten. Um engtolerierte Drehmomente sicherzustellen, stützen die Zwischenschalen 18,19 den Zapfen 1 nur an den konischen Lagerflächen 5,6 ab.

Die erste Zwischenschale 18 nimmt die zweite Zwischenschale 19 in einer zylindrischen Ausnehmung 20 auf. Die zweite Zwischenschale 19 ist über eine Tellerfeder 21 an dem Verschlußdeckel 11 des Gelenkgehäuses 9 abgestützt. Ein erster Spalt 14 zwischen Tellerfeder 21 und Verschlußdeckel 11 ermöglicht ein Einfedern der Tellerfeder 21.

Die erste Zwischenschale 18 ist unter Zwischenlage einer elastomeren oder gummielastischen Buchse 2 in das Gelenkgehäuse 9 eingepreßt. Die Buchse 2 hält die erste Zwischenschale 18 verdrehsicher im Gelenkgehäuse, ermöglicht aber deren begrenzte Winkel- und Radialbeweglichkeit. Zur Sicherung der begrenzten Winkelbeweglichkeit ist zwischen erster Zwischenschale 18 bzw. zweiter Zwischenschale 19 und Verschlußdeckel 11 ein zweiter Spalt 15 ausgebildet. Aus den gleichen Gründen ist eine an einem radialen Gehäusevorsprung 22 abgestützte Stirnfläche 23 der ersten Zwischenschale 18 als Innenkonus ausgebildet.

Wie besser anhand der Auschnittsvergrößerung gemäß Fig. 4 ersichtlich ist, bildet die Stirnfläche 23 mit dem Gehäusevorsprung 22 im Längsschnitt einen zur Zapfenachse geöffneten Spalt 24, der eine begrenzte Winkelbewegung der Zwischenschale 18,19 mit dem Zapfen 1 erleichert.

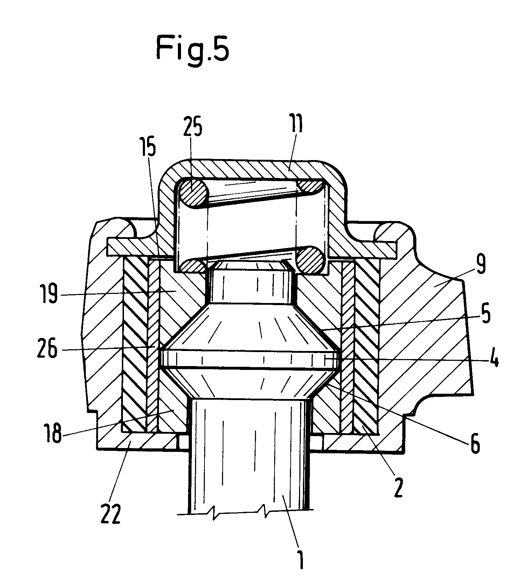

Das in der Fig. 5 dargestellte Lager hat ebenfalls einen Zapfen 1, der mit einem Bund 4 mit konischen Lagerflächen 5, 6 an einer ersten Zwischenschale 18 und einer zweiten Zwischenschale 19 drehbeweglich abgestützt ist. Die Zwischenschale 18, 19 halten den Zapfen 1 nur an den konischen Lagerflächen 5, 6.

Die erste Zwischenschale 18 ist an einem Gehäusevorsprung 22 und die zweite Zwischenschale 19 über eine Spiralfeder 25 an einem eingewalzten Verschlußdeckel 11 des Gelenkgehäuses 9 abgestützt.

Im Unterschied zu dem Lager gemäß Fig. 3 ist jedoch die zweite Zwischenschale 19 nicht in einer Ausnehmung der ersten Zwischenschale 18, sondern in einer technisch äquivalenten Zwischenhülse 26 geführt, die auch die erste Zwischenschale 18 aufnimmt. Eine elastische Buchse 2 ist zwischen Zwischenhülse 26 und Gelenkgehäuse 9 eingepreßt und ermöglicht eine begrenzte Winkelbeweglichkeit der Zwischenhülse 26 mit den Zwischenschalen 18, 19 und dem Zapfen 1 im Gelenkgehäuse 9. Dabei hält die Buchse 2 die Zwischenhülse 26 verdrehsicher im Gelenkgehäuse 9, so daß das Drehmoment des Zapfens 1 ausschließlich von der Materialpaarung Zapfen 1/Zwischenschalen 18, 19 und der Vorspannung der Spiralfeder 25 abhängt, vorausgesetzt die Zwischenschalen 18, 19 werden verdrehsicher in der Zwischenhülse 26 gehalten.

Zur Sicherung einer begrenzten Winkel- und Axialbeweglichkeit des Zapfens 1 ist zwischen Zwischenhülse 26 bzw. zweiter Zwischenschale 19 und Verschlußdeckel 11 ein Spalt 15 ausgebildet.

Auch bei dem Gelenk gemäß Fig. 5 können erste Zwischenschale 18 und Zwischenhülse 26 mit dem Gehäusevorsprung 22 im Längsschnitt einen zur Zapfenachse geöffneten Spalt bilden, der eine begrenzte Winkelbewegung des Zapfens 1 erleichtert.

Als Material für die Zwischenhülse 26 kommen besonders harte oder hartelastische Werkstoffe in Betracht, die einen erhöhten Reibungskoeffizienten mit den Materialien der angrenzenden Buchse 2 und der angrenzenden Zwischenschalen 18, 19 aufweisen können.

### Bezugszeichenliste:

- 1: Zapfen
- 2: Buchse
- 3: Zwischenschale
- 4: Bund
- 5: Lagerfläche (konisch)
- 6: Lagerfläche (konisch)
- 7: Lagerschale (erste)
- 8: Lagerschale (zweite)
- 9: Gelenkgehäuse
- 10: O-Ring
- 11: Verschlußdeckel 12 Stirnverzahnung
- 13: Scheibe
- 14: Spalt (erster)
- 15: Spalt (zweiter)
- 16: Spalt (dritter)
- 17: Fortsatz
- 18: Zwischenschale (erste)
- 19: Zwischenschale (zweite)
- 20: Ausnehmung
- 21: Tellerfeder
- 22: Gehäusevorsprung
- 23: Stirnfläche
- 24: Spalt
- 25: Spiralfeder
- 26: Zwischenhülse

## Patentansprüche

1. Elastisches Lager für Lenkgestänge von Kraftfahrzeugen mit einem drehbaren und begrenzt winkel- und radialbeweglichen Zapfen (1), wobei der Zapfen (1) unter Zwischenlage einer Buchse (2) begrenzt winkel- bzw. radialbeweglich in eine Zwischenschale (3) eingepreßt ist und wobei die Zwischenschale (3) beweglich in einem Gelenkgehäuse (9) gelagert ist,
**dadurch gekennzeichnet,** daß die Buchse (2) aus elastomeren Werkstoff besteht, daß die Zwischenschale (3) drehbar ist, und radial außen einen Bund (4) aufweist,
daß zwischen Zwischenschale (3) und Gelenkgehäuse (9) zwei sich axial beidseits des Bundes auf diesem mit Reibflächen abstützende, bezüglich des Gelenkgehäuses verdrehsichere Lagerschalen (7,8) eingesetzt sind
daß die Lagerschalen (7,8) von einem am Gelenkgehäuse (9) abgestützten Federelement (10) in Zapfenachsrichtung gegen den Bund (4) gedrückt werden.

2. Elastisches Lager nach Anspruch 1, dadurch gekennzeichnet, daß die eine Lagerschale (7) verdrehsicher in das Gelenkgehäuse (9) eingepreßt ist, daß das Federelement (10) an der anderen Lagerschale (8) anliegt und daß beide Lagerschalen (8) über eine Stirnverzahnung verdrehsicher zueinander gehalten sind.

3. Elastisches Lager nach Anspruch 2, dadurch gekennzeichnet, daß der Zapfen (1) stirnseitig eine vernietete Scheibe (13) zum Abstützen an einer Stirnseite der Zwischenschale (3) und am Gelenkgehäuse (9) hat und daß zur Erhaltung der Winkel- und Radialbeweglichkeit des Zapfens (1) zwischen Scheibe (13) und Stirnseite des Zapfens (1) bzw. Gelenkgehäuse (9) Spalte (14,15) ausgebildet sind.

4. Elastisches Lager für Lenkgestänge von Kraftfahrzeugen, mit einem drehbaren und begrenzt winkel- und radialbeweglichen Zapfen (1), wobei der Zapfen (1) drehbar in einer Zwischenschale (26) gelagert ist und wobei die Zwischenschale (26) unter Zwischenlage einer elastomeren Buchse (2) begrenzt winkel- und radialbeweglich in ein Gelenkgehäuse (9) eingepreßt ist,
**dadurch gekennzeichnet,**
daß der Zapfen (1) radial außen einen Bund (4) aufweist,
daß radial zwischen dem Zapfen (1) und der Zwischenschale (26) zwei sich axial beidseits des Bundes (4) auf diesem mit Reibflächen abstützende, bezüglich der Zwischenschale (26) verdrehsichere Lagerschalen (18,19) eingesetzt sind, und daß die Lagerschalen (18,19) von einem am Gelenkgehäuse (9) abgestützten Federelement (21) in Zapfenachsrichtung gegen den Bund (4) gedrückt werden.

5. Elastisches Lager nach Anspruch 4, dadurch gekennzeichnet, daß die Zwischenschale einstückig mit der einen Lagerschale (18) ausgebildet ist und daß die andere Lagerschale (19) in einer Ausnehmung (20) der einen Lagerschale (18) eingesetzt ist.

6. Elastisches Lager nach Anspruch 5, dadurch gekennzeichnet, daß die mit der Zwischenschale einstückige eine Lagerschale (18) sich mit einer Stirnfläche (23) an einem radialen Vorsprung (22) des Gelenkgehäuses abstützt.

7. Elastisches Lager nach Anspruch 6, dadurch gekennzeichnet, daß die Stirnfläche (23) der einen Lagerschale (18) einen Innenkonus aufweist, welcher mit dem radialen Gehäusevorsprung (22) im Längsschnitt einen zur Zapfenachse geöffneten Spalt (24) bildet.

8. Elastisches Lager nach einem der Ansprüche 4 bis 7, dadurch gekennzeichnet, daß beide Lagerschalen (18,19) mittels einer Verzahnung verdrehsicher zueinander gehalten sind.

9. Elastisches Lager nach einem der Ansprüche 1 bis 8, dadurch gekennzeichnet, daß der Bund (4) der Zwischenschale (3) bzw. des Zapfens (1) zwei konische Stützflächen (5,6) für die Lagerschalen (7,8,18,19) aufweist.

10. Elastisches Lager nach einem der Ansprüche 1 bis 9, dadurch gekennzeichent, daß als Federelement ein O-Ring (10) vorgesehen ist.

11. Elastisches Lager nach einem der Ansprüche 1 bis 9, dadurch gekennzeichnet, daß als Federelement eine Tellerfeder (21) vorgesehen ist.

12. Elastisches Lager nach einem der Ansprüche 1 bis 11, dadurch gekennzeichnet, daß die Zwischenschale (3) bzw. mindestens eine Lagerschale (7,8,18,19) aus einem harten oder hartelastischen Kunststoff besteht.

13. Elastisches Lager nach einem der Ansprüche 1 bis 11, dadurch gekennzeichnet, daß die Zwischenschale (3) bzw. mindestens eine Lagerschale (18,19) aus einem Lagermetall besteht.

## Claims

1. Elastic mounting for steering linkages of motor vehicles, having a rotatable pin (1) with limited angular and radial mobility, the pin (1) being pressed with the interposition of a bush (2) and with limited angular or radial mobility into an intermediate shell (3) and the intermediate shell (3) being mounted movably in a housing (9) of the joint, characterised in that the bush (2) is composed of an elastomeric material, in that the intermediate shell (3) is rotatable and, radially on the outside, has a collar (4), in that two bearing shells (7, 8) supported axially on the collar, on both sides of the latter, by friction faces and secured against rotation relative to the housing of the joint are inserted between the intermediate shell (3) and the housing (9) of the joint, in that the bearing shells (7, 8) are pressed against the collar (4) in the axial direction of the pin by a spring element (10) supported against the housing (9) of the joint.

2. Elastic mounting according to Claim 1, characterised in that one bearing shell (7) is pressed into the housing (9) of the joint in a manner secure against rotation, in that the spring element (10) rests against the other bearing shell (8) and in that both bearing shells (8) are held securely against rotation relative to one another via radial serrations.

3. Elastic mounting according to Claim 2, characterised in that, at the end, the pin (1) has a riveted disc (13) for support against one end of the intermediate shell (3) and against the housing (9) of the joint and in that gaps (14, 15) are formed between the disc (13) and the end face of the pin (1) and housing (9) of the joint in order to maintain the angular and radial mobility of the pin (1).

4. Elastic mounting for steering linkages of motor vehicles, having a rotatable pin (1) with limited angular and radial mobility, the pin (1) being mounted rotatably in an intermediate shell (26) and the intermediate shell (26) being pressed with the interposition of an elastomeric bush (2) and with limited angular and radial mobility into a housing (9) of the joint, characterised in that, radially on the outside, the pin (1) has a bush (4), in that two bearing shells (18, 19) supported axially on the collar (4), on both sides of the latter by friction faces and secured against rotation relative to the intermediate shell (26) are inserted radially between the pin (1) and the intermediate shell (26), and in that the bearing shells (18, 19) are pressed against the collar (4) in the axial direction of the pin by a spring element (21) supported against the housing (9) of the joint.

5. Elastic mounting according to Claim 4, characterised in that the intermediate shell is of integral design with one bearing shell (18) and in that the other bearing shell (19) is inserted in a recess (20) in the first bearing shell (18).

6. Elastic mounting according to Claim 5, characterised in that the first bearing shell (18), which is integral with the intermediate shell, is supported by an end face (23) against a radial projection (22) of the housing of the joint.

7. Elastic mounting according to Claim 6, characterised in that the end face (23) of the first bearing shell (18) has a female taper which, in longitudinal section, forms a gap (24) open towards the pin axis with the radial housing projection (22).

8. Elastic mounting according to one of Claims 4 to 7, characterised in that both bearing shells (18, 19) are held securely against rotation relative to one another by means of serrations.

9. Elastic mounting according to one of Claims 1 to 8, characterised in that the collar (4) of the intermediate shell (3) or pin (1) has two tapered supporting faces (5, 6) for the bearing shells (7, 8, 18, 19).

10. Elastic mounting according to one of Claims 1 to 9, characterised in that an O ring (10) is provided as the spring element.

11. Elastic mounting according to one of Claims 1 to 9, characterised in that a Belleville spring (21) is provided as the spring element.

12. Elastic mounting according to one of Claims 1 to 11, characterised in that the intermediate shell (3) or at least one bearing shell (7, 8, 18, 19) is composed of a rigid or rigid elastic plastic.

13. Elastic mounting according to one of Claims 1 to 11, characterised in that the intermediate shell (3) or at least one bearing shell (18, 19) is composed of a bearing metal.

## Revendications

1. Palier élastique pour organes de direction assemblés de véhicules automobiles, comprenant un tourillon (1) qui est rotatif et qui dispose d'une mobilité angulaire et radiale limitée, le tourillon (1) étant emmanché avec interposition d'un manchon (2) de manière à avoir une mobilité angulaire et radiale limitée dans une douille intermédiaire (3) et la douille intermédiaire (3) étant montée mobile dans un boîtier d'articulation (9), caractérisé en ce que le manchon (2) est on matière élastomère, en ce que la douille intermédiaire (3) est rotative et comporte radialement à l'extérieur un collet (4), en ce que deux coussinets (7, 8) prenant appui axialement de part et d'autre du collet contre ce dernier par des surfaces de friction sont montés entre la douille intermédiaire (3) et le boîtier d'articulation (9) et sont immobilisés en rotation par rapport à ce boîtier d'articulation, et en ce que les coussinets (7, 8) sont serrés dans la direction du tourillon contre le collet (4) par un élément élastique (10) prenant appui contre le boîtier d'articulation (9).

2. Palier élastique solon la revendication 1, caractérisé en ce que l'un des coussinets (7) est emmanché dans le boîtier d'articulation (9) de manière à être immobilisé en rotation, en ce que l'élément élastique (10) prend appui contre l'autre coussinet (8) et en ce que les deux coussinets (8) sont retenus par une denture d'extrémité de manière à être immobiles en rotation l'un par rapport à l'autre.

3. Palier élastique selon la revendication 2, caractérisé en ce que le tourillon (1) comporte à l'extrémité un disque riveté (13) d'appui contre un côté extrême de la douille intermédiaire (3) et contre le boîtier d'articulation (9) et en ce que des interstices (14, 15) sont ménagés pour l'obtention de la mobilité angulaire et radiale du tourillon (1) entre le disque (13) et l'extrémité du tourillon (1) et respectivement le boîtier d'articulation (9).

4. Palier élastique pour organes de direction assemblés de véhicules automobiles, comprenant un tourillon (1) rotatif et disposant d'une mobilité limitée angulaire et radiale, la tourillon (1) étant monté rotatif dans une douille intermédiaire (26) et la douille intermédiaire (26) étant emmanchée avec interposition d'un manchon d'élastomère (2) de manière à disposer d'une mobilité angulaire et radiale limitée dans un boîtier d'articulation (9), caractérisé en ce que le tourillon (1) comporte radialement à l'extérieur un collet (4), en en que deux coussinets (18, 19) prenant appui axialement de part et d'autre du collet (4) contre ce dernier par des surfaces de friction sont emmanché radialement entre le tourillon (1) et la douille intermédiaire (26) et sont immobilisés en rotation par rapport à la douille intermédiaire (26), et en ce que les coussinets (18, 19) sont serrés dans la direction du tourillon contre le collet (4) par un élément élastique (21) prenant appui contre le boîtier d'articulation (9).

5. Palier élastique selon la revendication 4, caractérisé en ce que la douille intermédiaire est en une pièce avec l'un des coussinets (18) et en ce que l'autre coussinet (19) est monté dans une cavité (20) du premier coussinet (18).

6. Palier élastique selon la revendication 5, caractérisé en ce que le coussinet (18) qui est en une pièce avec la douille intermédiaire prend appui par une surface extrême (23) contre une protubérance radiale (22) du boîtier d'articulation.

7. Palier élastique selon la revendication 6, caractérisé en ce que la surface extrême (23) de l'un des coussinets (18) comporte un cône interne qui forme en coupe longitudinale, avec la protubérance radiale (22) du boîtier, un interstice (24) qui est ouvert vers l'axe du tourillon.

8. Palier élastique solon l'une des revendications 4 à 7, caractérisé en ce que les deux coussinets (18, 19) sont retenus au moyen d'une denture de manière à être immobilisés en rotation l'un par rapport à l'autre.

9. Palier élastique selon l'une des revendications 1 à 8, caractérisé en ce que le collet (4) de la douille intermédiaire (3) ou du tourillon (1) comporte deux surfaces coniques d'appui (5, 6) pour les coussinets (7, 8, 18, 19).

10. Palier élastique selon l'une des revendications 1 à 9, caractérisé en ce que l'élément élastique est un anneau torique (10).

11. Palier élastique selon l'une des revendications 1 à 9, caractérisé en ce que l'élément élastique est un ressort Belleville (21).

12. Palier élastique selon l'une des revendications 1 à 11, caractérisé en ce que la frette intermédiaire (3) ou au moins un coussinet (7, 8, 18, 19) est en matière synthétique dure ou élastique dure.

13. Palier élastique selon l'une des revendications 1 à 11, caractérisé en ce que la frotte intermédiaire (3) ou au moins un coussinet (18, 19) est en métal antifriction.
